# EUROPEAN PATENT SPECIFICATION

(11) **EP 3 064 803 B1**
(45) Date of publication and mention of the grant of the patent: **19.08.2020**
(21) Application number: 14857848.7
(22) Date of filing: 17.10.2014
(51) Int. Cl.: F16H 3/091, F16H 3/097

(54) **DUAL-CLUTCH TRANSMISSION**
DOPPELKUPPLUNGSGETRIEBE
TRANSMISSION DE TYPE À DOUBLE EMBRAYAGE

(30) Priority: 30.10.2013 JP 2013225221
(43) Date of publication of application: 07.09.2016
(73) Proprietor: Isuzu Motors Limited, Tokyo 140-8722 (JP)
(72) Inventor: AKASHI, Kouhei, Fujisawa-shi Kanagawa 252-0881 (JP)
(74) Representative: Schaumburg und Partner Patentanwälte mbB
(86) International application number: PCT/JP2014/077695
(87) International publication number: WO 2015/064389

(56) References cited:
- JP-A- S61 274 147
- JP-A- 2006 077 987
- JP-A- 2010 531 417
- US-A1- 2006 048 593
- US-A1- 2010 162 840

## Description

### TECHNICAL FIELD

The present invention relates to a dual-clutch transmission.

### BACKGROUND ART

To date, a dual-clutch transmission is known that includes a first input shaft provided with a first clutch that transmits or interrupts power from a driving source, a second input shaft provided with a second clutch that transmits or interrupts the power from the driving source, and a plurality of speed-change gear pairs (transmission gear pairs). Such a dual-clutch transmission shifts gears by switching between the first clutch and the second clutch in an alternating manner.

For example, PATENT LITERATURE DOCUMENT 1 discloses a dual-clutch transmission in which a primary gear pair is reused as a 6th-speed gear pair, and thus the number of gear pairs is reduced.

### LISTING OF REFERENCES

### PATENT LITERATURE DOCUMENTS

PATENT LITERATURE DOCUMENT 1: Japanese Patent Application Laid-Open Publication (Kokai) No. 2010-531417

Document US 2006/048593 A1 discloses a dual-clutch transmission according to the preamble of claim 1.

Document US 2010/162840 A1 discloses a gear wheel speed change transmission with at least two power shift clutches, with gear wheels arranged in different gear wheel planes and with an input shaft and an output shaft, which can be actively interconnected by way of the gear wheels arranged in the gear wheel planes, which include at least six forward gears that can be shifted under power, all of the six forward gears, which are sequentially power-shiftable, and two reverse gears are formed by exactly six gear wheel planes and exactly three shift units with shift collars, which all have engagement positions at both sides of their neutral center position.

### SUMMARY OF THE INVENTION

### PROBLEMS TO BE SOLVED BY THE INVENTION

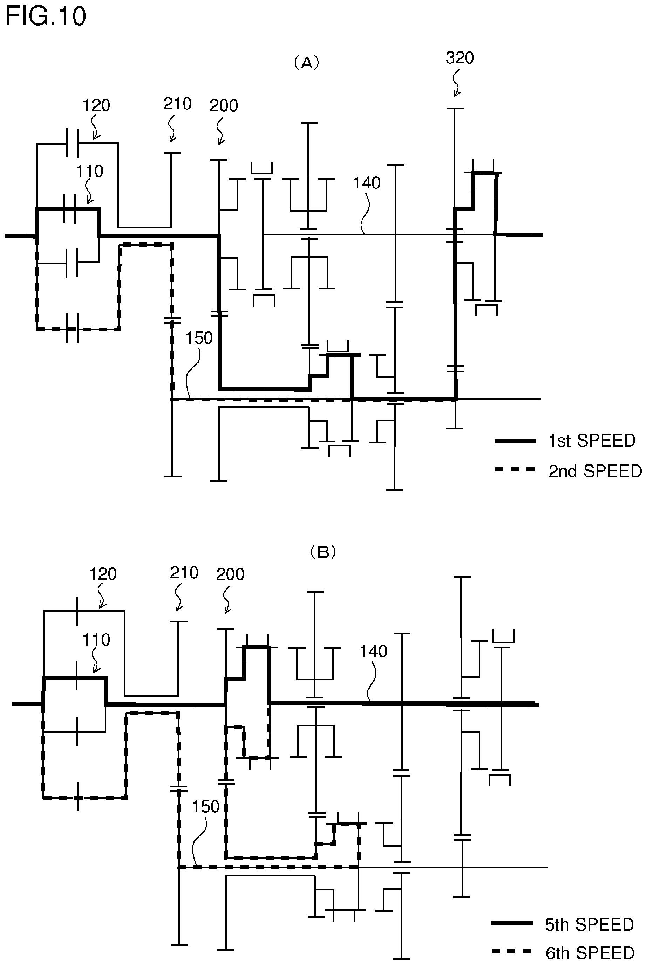

In the above-described conventional technique in which the primary gear pair is reused, as illustrated in Fig. 10(A), the gearshift between the 1 st speed and the 2nd speed is achieved by connecting a 1st/2nd-speed shared gear pair 320 to an input shaft 140 and by selectively switching between a first primary gear pair 200 and a second primary gear pair 210. As illustrated in Fig. 10(B), the gearshift to the 5th speed is achieved by directly connecting a first input shaft 110 to the output shaft 140, and the gearshift to the 6th speed is achieved by reusing the first primary gear pair 200 as a gearshift gear pair.

In the conventional dual-clutch transmission, the gear ratio of the 1st speed to the 2nd speed equals the ratio of the gear ratio of the first primary gear pair 200 to the gear ratio of the second primary gear pair 210, and the gear ratio of the 5th speed to the 6th speed equals the inverse of the gear ratio of the second primary gear pair 210 to the gear ratio of the first primary gear pair 200. Thus, the gear ratio of the 1st speed to the 2nd speed is equal to the gear ratio of the 5th speed to the 6th speed.

In general, in order to ensure good feeling of connectedness at the time of shifting gears (hereinafter, referred to as "gearshift feeling"), it is preferred that a greater gear ratio be set to a ratio of one speed to a next speed in lower gears and a smaller gear ratio be set to a gear ratio of one speed to a next speed in higher gears. However, in the above-described dual-clutch transmission, the gear ratio of the 1st speed to the 2nd speed is equal to the gear ratio of the 5th speed to the 6th speed, and these gear ratios cannot be set independently to optimal values. Thus, there is a problem, i.e., the gearshift feeling deteriorates.

An object of the dual-clutch transmission disclosed herein is to effectively prevent the deterioration of the gearshift feeling.

### SOLUTION TO OVERCOME THE PROBLEMS

A dual-clutch transmission according to claim 1 is provided. Dependent claims 2 and 3 concern particular embodiments of the invention as defined in claim 1.

### ADVANTAGES OF THE INVENTION

The dual-clutch transmission disclosed herein can effectively prevent the deterioration of the gearshift feeling.

### BRIEF DESCRIPTION OF THE DRAWINGS

Fig. 1 is a skeleton diagram of a dual-clutch transmission according to an embodiment of the present invention.
Fig. 2 illustrates a 1st-speed power transmitting path in the dual-clutch transmission illustrated in Fig. 1.
Fig. 3 illustrates a 2nd-speed power transmitting path in the dual-clutch transmission illustrated in Fig. 1.
Fig. 4 illustrates a 3rd-speed power transmitting path in the dual-clutch transmission illustrated in Fig. 1.
Fig. 5 illustrates a 4th-speed power transmitting path in the dual-clutch transmission illustrated in Fig. 1.
Fig. 6 illustrates a 5th-speed power transmitting path in the dual-clutch transmission illustrated in Fig. 1.
Fig. 7 illustrates a 6th-speed power transmitting path in the dual-clutch transmission illustrated in Fig. 1.
Fig. 8 illustrates a 7th-speed power transmitting path in the dual-clutch transmission illustrated in Fig. 1.

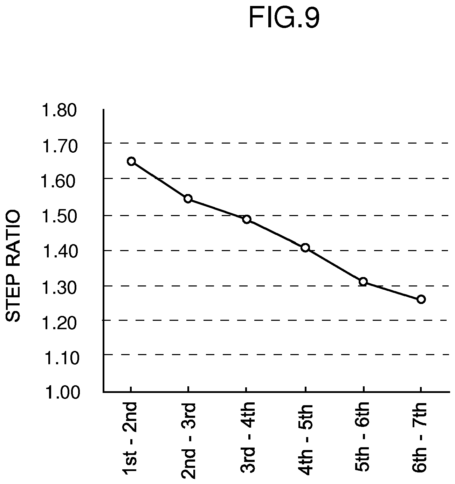

Fig. 9 is a graph useful to describe an example of a step ratio (ratio of one speed gear ratio to another speed gear ratio) in the embodiment of the present invention.
Fig. 10 is a set of views useful to describe power transmitting paths in a conventional dual-clutch transmission.

### MODE FOR CARRYING OUT THE INVENTION

Hereinafter, a dual-clutch transmission according to an embodiment of the present invention will be described with reference to the accompanying drawings. Identical components are given identical reference characters, and their names and functions are identical as well. Therefore, detailed descriptions of such components will not be repeated.

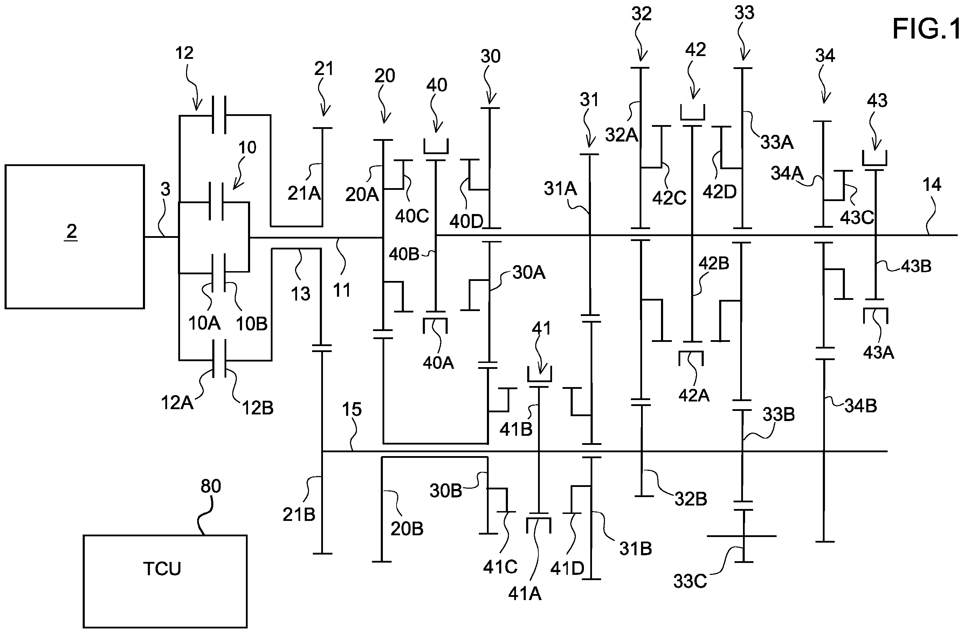

As illustrated in Fig. 1, a first clutch 10 is provided at an input end of a first input shaft 11. A second clutch 12 is provided at an input end of a second input shaft 13. The second input shaft 13 has a hollow shaft that penetrates in the axial direction, and the first input shaft extends through this hollow shaft such that the first input shaft is rotatable relative to the hollow shaft.

An output shaft 14 is disposed coaxially with the first input shaft 11, and is spaced from the first input shaft 11. A countershaft 15 is disposed in parallel with the input shafts 11 and 13 and the output shaft 14.

The first clutch 10 includes a first pressure plate 10A fixed to a crankshaft 3 of an engine 2 and a first clutch disc 10B fixed to the input end of the first input shaft 11. As the first pressure plate 10A moves to make pressure-contact with the first clutch disc 10B, the power of the engine 2 is transmitted to the first input shaft 11 via the first clutch 10.

The second clutch 12 includes a second pressure plate 12A fixed to the crankshaft 3 of the engine 2 and a second clutch disc 12B fixed to the input end of the second input shaft 13. As the second pressure plate 12A moves to make pressure-contact with the second clutch disc 12B, the power of the engine 2 is transmitted to the second input shaft 13 via the second clutch 12.

A first primary gear pair 20, which is an example of a first input gear pair according to the present invention, includes a first input gear 20A and a first counter gear (auxiliary gear) 20B. The first input gear 20A meshes with the first counter gear 20B. The first input gear 20A is fixed to an output end of the first input shaft 11. The first counter gear 20B is provided on the countershaft 15 such that the first counter gear 20B is rotatable relative to the countershaft 15. The first counter gear 20B is integrated with a 3rd-speed counter gear 30B, which will be described later.

A second primary gear pair 21, which is an example of a second input gear pair according to the present invention, includes a second input gear 21A and a second counter gear 21B. The second input gear 21A meshes with the second counter gear 21B. The second input gear 21A is fixed to an output end of the second input shaft 13. The second counter gear 21B is fixed to an input end of the countershaft 15. The power of the engine 2 transmitted to the second input shaft 13 via the second clutch 12 is directly transmitted to the countershaft 15 via the second primary gear pair 21.

A 3rd-speed gear pair 30, which is an example of a second speed-change gear pair according to the present invention, includes a 3rd-speed output gear 30A and the 3rd-speed counter gear 30B. The 3rd-speed output gear 30A meshes with the 3rd-speed counter gear 30B. The 3rd-speed output gear 30A is provided on the output shaft 14 such that the 3rd-speed output gear 30A is rotatable relative to the output shaft 14. The 3rd-speed counter gear 30B is formed so as to be integrally rotatable with the first counter gear 20B. Specifically, a hollow shaft is formed in the first counter gear 20B and the 3rd-speed counter gear 30B, which are integrated, so as to penetrate therethrough in the axial direction. The countershaft 15 extends through the hollow shaft such that the countershaft 15 is freely rotatable. The number of teeth in the 3rd-speed output gear 30A is greater than the number of teeth in the 3rd-speed counter gear 30B.

A 6th-speed gear pair 31, which is an example of a third speed-change gear pair according to the present invention, includes a 6th-speed output gear 31A and a 6th-speed counter gear 31B. The 6th-speed output gear 31A meshes with the 6th-speed counter gear 31B. The 6th-speed output gear 31A is fixed to the output shaft 14, and the 6th-speed counter gear 31B is provided on the countershaft 15 such that 6th-speed counter gear 31B is rotatable relative to the countershaft 15. The number of teeth in the 6th-speed output gear 31A is smaller than the number of teeth in the 6th-speed counter gear 31B.

A 1st/2nd-speed shared gear pair 32, which is an example of a first speed-change gear pair according to the present invention, includes a 1st/2nd-speed output gear 32A and a 1st/2nd-speed counter gear 32B. The 1st/2nd-speed output gear 32A meshes with the 1st/2nd-speed counter gear 32B. The 1st/2nd-speed output gear 32A is provided on the output shaft 14 such that the 1st/2nd-speed output gear 32A is rotatable relative to the output shaft 14, and the 1st/2nd-speed counter gear 32B is fixed to the countershaft 15. The number of teeth in the 1st/2nd-speed output gear 32A is greater than the number of teeth in the 1st/2nd-speed counter gear 32B.

A reverse gear set 33 includes a reverse output gear 33A, a reverse counter gear 33B, and an idler gear 33C, which mesh with one another. The reverse output gear 33A is provided on the output shaft 14 such that the reverse output gear 33A is rotatable relative to the output shaft 14, and the reverse counter gear 33B is fixed to the countershaft 15.

A 4th-speed gear pair 34, which is an example of a fourth speed-change gear pair according to the present invention, includes a 4th-speed output gear 34A and a 4th-speed counter gear 34B. The 4th-speed output gear 34A meshes with the 4th-speed counter gear 34B. The 4th-speed output gear 34A is provided on the output shaft 14 such that the 4th-speed output gear 34A is rotatable relative to the output shaft 14, and the 4th-speed counter gear 34B is fixed to the countershaft 15. The number of teeth in the 4th-speed output gear 34A is greater than the number of teeth in the 4th-speed counter gear 34B.

A first synchronizer mechanism 40, which is an example of a first connecting unit according to the present invention, includes a first sleeve 40A movable in the axial direction in accordance with a shift operation of a shift lever device (not illustrated), a spline 40B fixed to an input end of the output shaft 14, a spline 40C fixed to the first input gear 20A, and a spline 40D fixed to the 3rd-speed output gear 30A.

As the first sleeve 40A moves toward the first input gear 20A and engages with the spline 40C, the first input gear 20A is connected to the output shaft 14 (the first input shaft 11 is directly connected to the output shaft 14). On the other hand, as the first sleeve 40A moves toward the 3rd-speed output gear 30A and engages with the spline 40D, the 3rd-speed output gear 30A is connected to the output shaft 14. In other words, the first synchronizer mechanism 40 can selectively connect the first input gear 20A or the 3rd-speed output gear 30A to the output shaft 14.

A second synchronizer mechanism 41, which is an example of a second connecting unit according to the present invention, includes a second sleeve 41A movable in the axial direction, a spline 41B fixed to the countershaft 15 at a position between the 3rd-speed counter gear 30B and the 6th-speed counter gear 31B, a spline 41C fixed to the 3rd-speed counter gear 30B, and a spline 41D fixed to the 6th-speed counter gear 31B.

As the second sleeve 41A moves toward the 3rd-speed counter gear 30B and engages with the spline 41C, the 3rd-speed counter gear 30B becomes connected to the countershaft 15. On the other hand, as the second sleeve 41A moves toward the 6th-speed counter gear 31B and engages with the spline 42D, the 6th-speed counter gear 31B becomes connected to the countershaft 15. In other words, the second synchronizer mechanism 41 can selectively connect the 3rd-speed counter gear 30B or the 6th-speed counter gear 31B to the countershaft 15.

A third synchronizer mechanism 42, which is an example of a third connecting unit according to the present invention, includes a third sleeve 42A movable in the axial direction, a spline 42B fixed to the output shaft 14 at a position between the 1st/2nd-speed output gear 32A and the reverse output gear 33A, a spline 42C fixed to the 1st/2nd-speed output gear 32A, and a spline 42D fixed to the reverse output gear 33A.

As the third sleeve 42A moves toward the 1st/2nd-speed output gear 32A and engages with the spline 42C, the 1st/2nd-speed output gear 32A becomes connected to the output shaft 14. On the other hand, as the third sleeve 42A moves toward the reverse output gear 33A and engages with the spline 42D, the reverse output gear 33A becomes connected to the output shaft 14. In other words, the third synchronizer mechanism 42 can selectively connect the 1st/2nd-speed output gear 32A or the reverse output gear 33A to the output shaft 14.

A fourth synchronizer mechanism 43, which is an example of a fourth connecting unit according to the present invention, includes a fourth sleeve 43A movable in the axial direction, a spline 43B fixed to the output shaft 14 at a position where the spline 43B is closer to the output end than the 4th-speed output gear 34A is, and a spline 43C fixed to the 4th-speed output gear 34A.

As the fourth sleeve 43A moves toward the 4th-speed output gear 34A and engages with the spline 43C, the 4th-speed output gear 34A becomes connected to the output shaft 14. In other words, the fourth synchronizer mechanism 43 can selectively connect the 4th-speed output gear 34A to the output shaft 14.

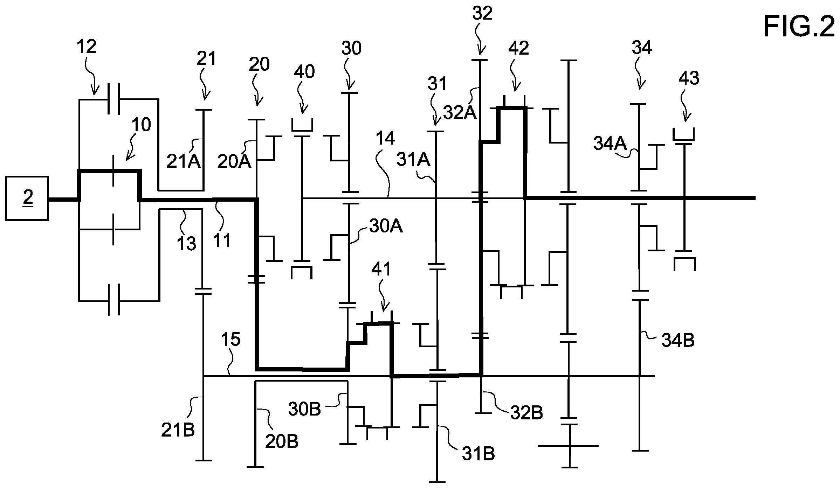

A transmission control unit (TCU) 80 executes gear-shifting control to actuate the first clutch 10, the second clutch 12, and the synchronizer mechanisms 40 to 43 in accordance with a shift operation of a shift device (not illustrated). In the following description, the power transmitting paths in the forward-moving positions in the gear-shifting control of the TCU 80 will be described with reference to Figs. 2 to 8.

Fig. 2 illustrates a 1st-speed power transmitting path. In the 1st speed, the first clutch 10 is selected, the second synchronizer mechanism 41 connects the 3rd-speed counter gear 30B to the countershaft 15, and the third synchronizer mechanism 42 connects the 1st/2nd-speed output gear 32A to the output shaft 14.

In other words, the power of the engine 2 is transmitted to the output shaft 14 via the first clutch 10, the first input shaft 11, the first primary gear pair 20, the 3rd-speed counter gear 30B, the countershaft 15, and the 1st/2nd-speed shared gear pair 32.

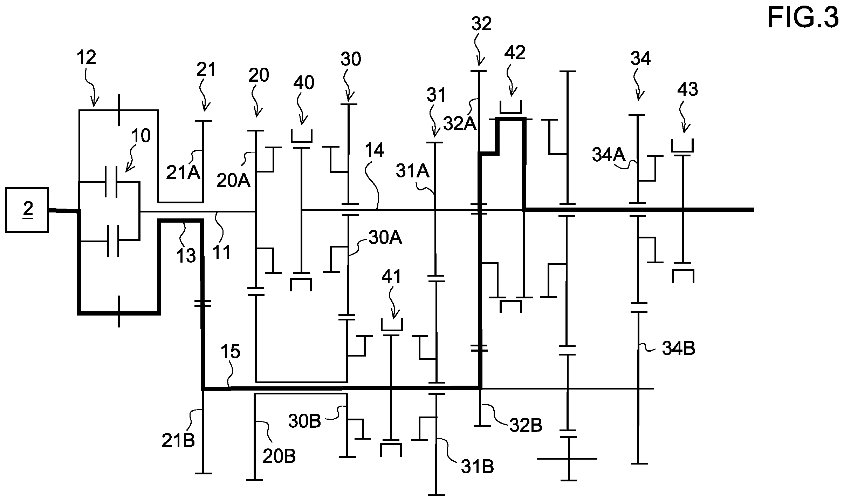

Fig. 3 illustrates a 2nd-speed power transmitting path. The 2nd speed is achieved by switching, from the state of the 1st-speed, the first clutch 10 to the second clutch 12. In other words, the power of the engine 2 is transmitted to the output shaft 14 via the second clutch 12, the second input shaft 13, the second primary gear pair 21, the countershaft 15, and the 1st/2nd-speed shared gear pair 32.

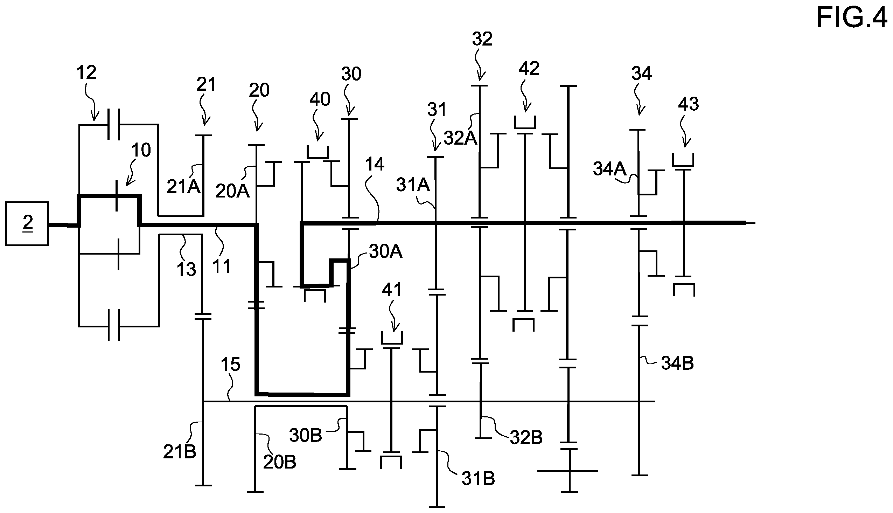

Fig. 4 illustrates a 3rd-speed power transmitting path. To achieve the 3rd speed, the first synchronizer mechanism 40 connects the 3rd-speed output gear 30A to the output shaft 14 in the state of the 2nd speed, and a standby state is entered. Then, the second clutch 12 is switched to the first clutch 10.

In other words, the power of the engine 2 is transmitted to the output shaft 14 via the first clutch 10, the first input shaft 11, the first primary gear pair 20, and the 3rd-speed gear pair 30.

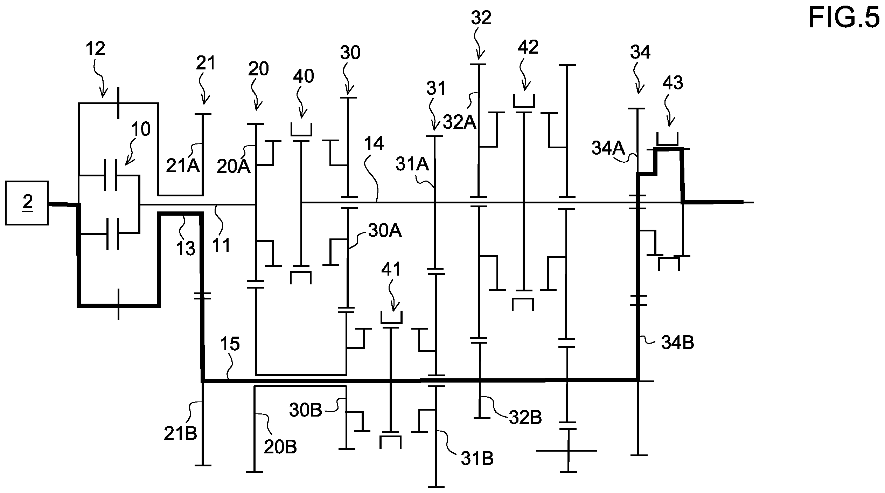

Fig. 5 illustrates a 4th-speed power transmitting path. To achieve the 4th speed, the fourth synchronizer mechanism 43 connects the 4th-speed output gear 34A to the output shaft 14 in the state of the 3rd speed, and a standby state is entered. Then, the first clutch 10 is switched to the second clutch 12.

In other words, the power of the engine 2 is transmitted to the output shaft 14 via the second clutch 12, the second input shaft 13, the second primary gear pair 21, the countershaft 15, and the 4th-speed gear pair 34.

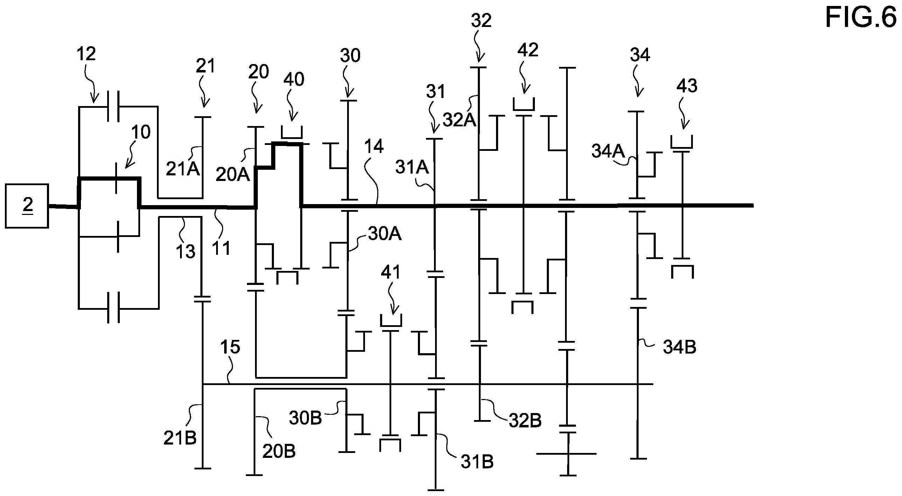

Fig. 6 illustrates a 5th-speed power transmitting path. To achieve the 5th speed, the first synchronizer mechanism 40 (directly) connects the first input gear 20A to the output shaft 14 in the state of the 4th speed, and a standby state is entered. Then, the second clutch 12 is switched to the first clutch 10.

In other words, the power of the engine 2 is transmitted to the output shaft 14 via the first clutch 10, the first input shaft 11, and the first input gear 20A.

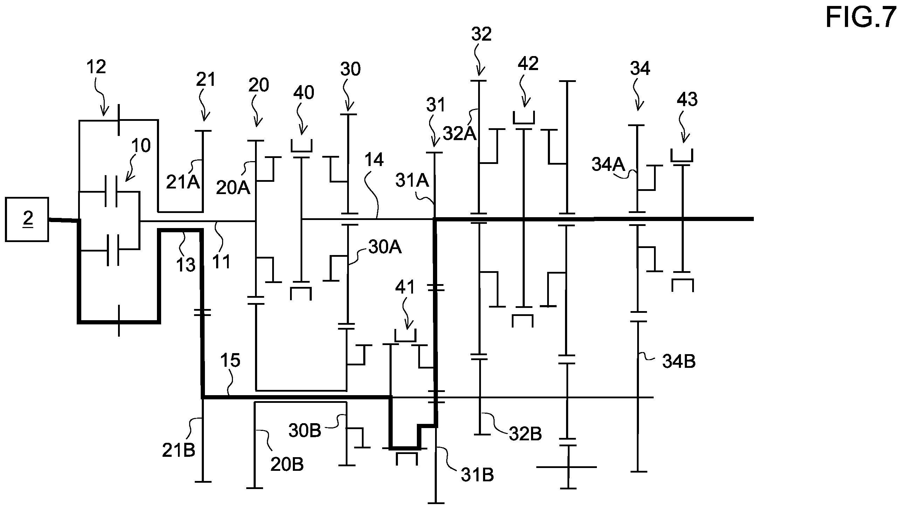

Fig. 7 illustrates a 6th-speed power transmitting path. To achieve the 6th speed, the second synchronizer mechanism 41 connects the 6th-speed counter gear 31B to the countershaft 15 in the state of the 5th speed, and a standby state is entered. Then, the first clutch 10 is switched to the second clutch 12.

In other words, the power of the engine 2 is transmitted to the output shaft 14 via the second clutch 12, the second input shaft 13, the second primary gear pair 21, the countershaft 15, and the 6th-speed gear pair 31.

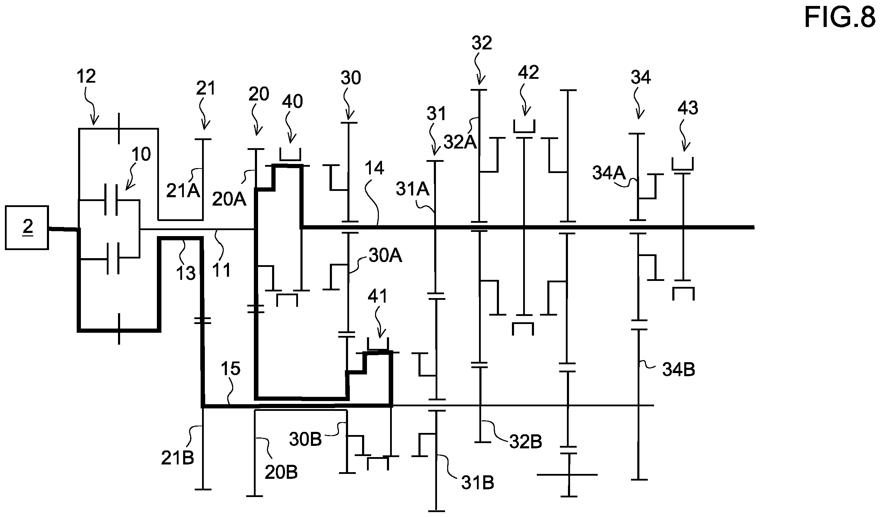

Fig. 8 illustrates a 7th-speed power transmitting path. To achieve the 7th speed, the second clutch 12 is temporarily disconnected in the state of the 6th speed. Then, the first synchronizer mechanism 40 connects the first input gear 20A to the output shaft 14, the second synchronizer mechanism 41 connects the 3rd-speed counter gear 30B to the countershaft 15, and the second clutch 12 is reconnected.

In other words, the power of the engine 10 is transmitted to the output shaft 14 via the second clutch 12, the second input shaft 13, the second primary gear pair 21, the countershaft 15, the 3rd-speed counter gear 30B, and the first primary gear pair 20. Thus, the first primary gear pair 20 can be reused as a speed-change gear pair (transmission gear pair). It should be noted that when shifting from the 6th speed to the 7th speed, the second clutch 12 is disconnected and connected, and thus a so-called torque loss occurs. However, its influence is small in the high-order speeds.

The gear ratios and the step ratios in the dual-clutch transmission according to the present embodiment will now be described. The numerical values used in the following description are merely examples of the present embodiment, and any optimal values can be set as appropriate within the scope that does not depart from the spirit of the present invention.

Examples of the number of teeth and the gear ratio in each gear pair are shown in Table 1, and the gear ratios in the gear positions 1 to 7 (1st speed to 7th speed) are shown in Table 2. In Table 1, the number of teeth Z1 in the upper row indicates the number of teeth in a gear provided on the countershaft 15, and the number of teeth Z2 in the middle row indicates the number of teeth in a gear provided on the input shaft 11 or 13 or the output shaft 14

**[Table 1]**

| | Pri-1 | Pri-2 | 3rd 6 | ^{th} | 1st/2nd | 4th |
|---|---|---|---|---|---|---|
| Number of teeth Z1 | 28 | 40 | 30 | 37 | 13 | 27 |
| Number of teeth Z2 | 45 | 39 | 39 | 29 | 43 | 39 |
| Gear ratio | 1.61 | 0.98 | 1.30 | 0.78 | 3.31 | 1.44 |

**[Table 2]**

| | 1st | 2nd | 3rd | 4th | 5th | 6th | 7th |
|---|---|---|---|---|---|---|---|
| Primary gear ratio | 1.61 | 0.98 | 1.61 | 0.98 | 1.00 | 0.98 | 0.98 |
| Speed-change gear ratio | 3.31 | 3.31 | 1.30 | 1.44 | 1.00 | 0.78 | 0.62 |
| Total gear ratio | 5.316 | 3.225 | 2.089 | 1.408 | 1.000 | 0.764 | 0.607 |

The step ratio of the 1st speed to the 2nd speed, and the step ratio of the 5th speed to the 7th speed are calculated from Table 2. The step ratio of the 1st speed to the 2nd speed is approximately 1.648 (= 1st speed/2nd speed), and the step ratio of the 5th speed to the 7th speed is also approximately 1.648 (= 5th speed/7th speed). These step ratios are substantially equal to each other. In order to retain favorable gearshift feeling, it is preferred that a greater step ratio be set in lower gears (lower speeds) and a smaller step ratio be set in higher gears (higher speeds). In the present embodiment, even when the step ratio of the 1st speed to the 2nd speed is extended and the step ratio of the 5th speed to the 7th speed is correspondingly extended, a small step ratio can be set in high gears, as illustrated in Fig. 10 for example, since the 6th-speed gear pair 31 of which the gear ratio can be set independently is provided.

In addition, the output gears of the 3rd-speed gear pair 30, the 1st/2nd-speed shared gear pair 32, and the 4th-speed gear pair 34, which are reduction gear pairs, are all supported on the output shaft 14 so as to be idle, and only the output gear 31A of the 6th-speed gear pair 31, which is an acceleration gear pair, is fixed to the output shaft 14. Therefore, there is no counter gear that is continuously accelerated relative to the output shaft 14, and heat production, wears, and so on to be caused by high-speed rotations are effectively suppressed.

Advantageous effects of the dual-clutch transmission according to the present embodiment will now be described.

In a conventional dual-clutch transmission, the step ratio of the 1st speed to 2nd speed is equal to the step ratio of the 5th speed to 6th speed, and these step ratios cannot be set independently to optimal values. Thus, an issue remains in that the gearshift feeling deteriorates.

On the contrary, in the dual-clutch transmission according to the present embodiment, although the step ratio of the 1st speed to the 2nd speed is equal to the step ratio of the 5th speed to the 7th speed, the 6th-speed gear pair 31 of which the gear ratio can be set independently is provided between the 5th speed and the 7th speed. In other words, even when the step ratio of the 1st speed to the 2nd speed is extended to improve the gearshift feeling and the step ratio of the 5th speed to the 7th speed is correspondingly extended, the step ratio in higher gears can be set small because the 6th-speed gear pair 31 is provided between the 5th speed and the 7th speed. Accordingly, the dual-clutch transmission of this embodiment can set favorable step ratios that are smaller in higher gears and to effectively improve the gearshift feeling.

In addition, a conventional dual-clutch transmission suffers from another problem. An output gear of a reduction gear pair (e.g., 4th-speed gear pair) is fixed to an output shaft. Therefore, high-speed rotations of the output shaft cause the counter gear to rotate at even higher speed than the output shaft. This increases heat generation, wears, losses, and so on.

On the contrary, in the dual-clutch transmission according to this embodiment, only the 6th-speed output gear 31A is fixed to the output shaft 14, and the other output gears are supported on the output shaft 14 so as to be idle. The 6th-speed gear pair 31 is an acceleration gear pair, and thus the rotations of the output shaft 14 are continuously decelerated and transmitted to the 6th-speed counter gear 31B. Accordingly, the dual-clutch transmission of this embodiment can effectively reduce heat generation, wears, losses, and so on in the counter gears, since there is no counter gear that is continuously accelerated relative to the output shaft 14.

It should be noted that the present invention is not limited to the above-described embodiments.

For example, the 3rd-speed counter gear 30B and the first counter gear 20B do not have to be integrated and may be provided as separate gears. In this configuration, the 3rd-speed counter gear 30B and the first counter gear 20B may be configured to be selectively connectable to the countershaft 15 with a synchronizer mechanism or the like.

### REFERENCE NUMERALS AND SYMBOLS

- 2:: Engine
- 10:: First clutch
- 11:: First input shaft
- 12:: Second clutch
- 13:: Second input shaft
- 14:: Output shaft
- 15:: Countershaft
- 20:: First primary gear pair
- 21:: Second primary gear pair
- 30:: 3rd-speed gear pair
- 31:: 6th-speed gear pair
- 32:: 1st/2nd-speed shared gear pair
- 34:: 4th-speed gear pair
- 40:: First synchronizer mechanism
- 41:: Second synchronizer mechanism
- 42:: Third synchronizer mechanism
- 43:: Fourth synchronizer mechanism

## Claims

1. A dual-clutch transmission comprising:
a first input shaft (11) provided with a first clutch (10) that transmits or interrupts power from a driving source;
a second input shaft (13) provided with a second clutch (12) that transmits or interrupts the power from the driving source;
an output shaft (14) disposed coaxially with the first input shaft (11);
a countershaft (15) disposed in parallel with the first input shaft (11), the second input shaft (13), and the output shaft (14);
a first input gear pair (20) including a first input primary gear (20A) fixed to the first input shaft (11), and a first input counter gear (20B) provided on the countershaft (15) such that the first input counter gear (20B) is rotatable relative to the countershaft (15), the first input counter gear (20B) being configured to mesh with the first input primary gear (20A);
a second input gear pair (21) including a second input primary gear (21A) fixed to the second input shaft (13), and a second input counter gear (21B) fixed to the countershaft (15), the second input counter gear (21B) being configured to mesh with the second input primary gear (21A);
a first speed-change gear pair (32) including a first output primary gear (32A) provided on the output shaft (14) such that the first output primary gear (32A) is rotatable relative to the output shaft (14), and a first output counter gear (32B) fixed to the countershaft (15), the first output counter gear (32B) being configured to mesh with the first output primary gear (32A);
a second speed-change gear pair (30) including a second output primary gear (30A) provided on the output shaft (14) such that the second output primary gear (30A) is rotatable relative to the output shaft (14), the second output primary gear (30A) being closer to an input end of the output shaft (14) than the first output primary gear (32A), and a second output counter gear (30B) configured to be integrally rotatable with the first input counter gear (20B), the second output counter gear (30B) being configured to mesh with the second output primary gear (30A);
a third speed-change gear pair (31) including a third output primary gear (31A) fixed to the output shaft (14) at a position between the second output primary gear (30A) and the first output primary gear (32A), and a third output counter gear (31B) provided on the countershaft (15) such that the third output counter gear (31B) is rotatable relative to the countershaft (15), the third output counter gear (31B) being configured to mesh with the third output primary gear (31A);
a fourth speed-change gear pair (34) including a fourth output primary gear (34A) provided on the output shaft (14) such that the fourth output primary gear (34A) is rotatable relative to the output shaft (14), the fourth output primary gear (34A) being closer to an output end of the output shaft (14) than the first output primary gear (32A), and a fourth output counter gear (34B) fixed to the countershaft (15), the fourth output counter gear (34B) being configured to mesh with the fourth output primary gear (34A);
first connecting means (40) configured to selectively connect the first input primary gear (20A) or the second output primary gear (30A) to the output shaft (14);
second connecting means (41) configured to selectively connect the second output counter gear (30B) or the third output counter gear (31B) to the countershaft (15); and
third connecting means (42) configured to selectively connect at least the first output primary gear (32A) to the output shaft (14); and
fourth connecting means (43) configured to selectively connect at least the fourth output primary gear (34A) to the output shaft (14),
**characterized in that** the dual-clutch transmission is configured such that gearshift from a 5th speed, having the 5th highest gear ratio, in which the first connecting means (40) connects the first input primary gear (20A) to the output shaft (14), to a 6th speed, having the 6th highest gear ratio, is performed by the second connecting means (41) connecting the third output counter gear (31B) to the countershaft (15) and then the first clutch (10) being switched to the second clutch (12),
and thereafter, further gearshift from the the 6th speed to a 7th speed, having the 7th highest gear ratio, is performed by the second clutch (12) disconnected, the first connecting means (40) connecting the first input primary gear (20A) to the output shaft (14), the second connecting means (41) connecting the second output counter gear (30B) to the countershaft (15), and then the second clutch (12) reconnected.

2. The dual-clutch transmission according to claim 1, wherein the first, second, and fourth speed-change gear pairs (32, 30, 34) are reduction gear pairs of which the numbers of teeth in the gears on the output shaft (14) are greater than the numbers of teeth in the gears on the countershaft (15), and
the third speed-change gear pair (31) is an acceleration gear pair of which the number of teeth in the gear on the output shaft (14) is smaller than the number of teeth in the gear on the countershaft (15).

3. The dual-clutch transmission according to claim 1 or 2, wherein the first speed-change gear pair (32) is a gear pair shared for a 1st speed, having the highest gear ratio, and a 2nd speed, having the 2nd highest gear ratio, the third speed-change gear pair (31) is a gear for the 6th speed, and for the 7th speed , the second clutch (12) is connected, the second connecting means (41) connects the second output counter gear (30B) to the countershaft (15), the first connecting means (40) connects the first input primary gear (20A) to the output shaft (14), and the first input gear pair (20) is used as a speed-change gear pair.

## Patentansprüche

1. Doppelkupplungsgetriebe, umfassend:
eine erste Eingangswelle (11), die mit einer ersten Kupplung (10) versehen ist, die Leistung aus einer Antriebsquelle überträgt oder unterbricht;
eine zweite Eingangswelle (13), die mit einer zweiten Kupplung (12) versehen ist, die die Leistung aus der Antriebsquelle überträgt oder unterbricht;
eine Ausgangswelle (14), die koaxial zu der ersten Eingangswelle (11) angeordnet ist;
eine Vorgelegewelle (15), die parallel zu der ersten Eingangswelle (11), der zweiten Eingangswelle (13) und der Ausgangswelle (14) angeordnet ist;
ein erstes Eingangszahnradpaar (20), das ein erstes Eingangsprimärzahnrad (20A) enthält, das an der ersten Eingangswelle (11) befestigt ist, sowie ein erstes Eingangsvorgelegezahnrad (20B), das auf der Vorgelegewelle (15) derart vorgesehen ist, dass das erste Eingangsvorgelegezahnrad (20B) relativ zur Vorgelegewelle (15) drehbar ist, wobei das erste Eingangsvorgelegezahnrad (20B) ausgebildet ist, um in das erste Eingangsprimärzahnrad (20A) einzugreifen;
ein zweites Eingangszahnradpaar (21), das ein zweites Eingangsprimärzahnrad (21A) enthält, das an der zweiten Eingangswelle (13) befestigt ist, sowie ein zweites Eingangsvorgelegezahnrad (21B), das an der Vorgelegewelle (15) befestigt ist, wobei das zweite Eingangsvorgelegezahnrad (21B) ausgebildet ist, um in das zweite Eingangsprimärzahnrad (21A) einzugreifen;
ein erstes Geschwindigkeitswechselzahnradpaar (32), das ein erstes Ausgangsprimärzahnrad (32A) enthält, das auf der Ausgangswelle (14) derart vorgesehen ist, dass das erste Ausgangsprimärzahnrad (32A) relativ zur Ausgangswelle (14) drehbar ist, sowie ein erstes Ausgangsvorgelegezahnrad (32B), das an der Vorgelegewelle (15) befestigt ist, wobei das erste Ausgangsvorgelegezahnrad (32B) ausgebildet ist, um in das erste Ausgangsprimärzahnrad (32A) einzugreifen;
ein zweites Geschwindigkeitswechselzahnradpaar (30), das ein zweites Ausgangsprimärzahnrad (30A) enthält, das auf der Ausgangswelle (14) derart vorgesehen ist, dass das zweite Ausgangsprimärzahnrad (30A) relativ zur Ausgangswelle (14) drehbar ist, wobei das zweite Ausgangsprimärzahnrad (30A) näher zu einem Eingangsende der Ausgangswelle (14) ist als das erste Ausgangsprimärzahnrad (32A), sowie ein zweites Ausgangsvorgelegezahnrad (30B), das ausgebildet ist, um mit dem ersten Eingangsvorgelegezahnrad (20B) integral drehbar zu sein, wobei das zweite Ausgangsvorgelegezahnrad (30B) ausgebildet ist, um in das zweite Ausgangsprimärzahnrad (30A) einzugreifen;
ein drittes Geschwindigkeitswechselzahnradpaar (31), das ein drittes Ausgangsprimärzahnrad (31A) enthält, das an der Ausgangswelle (14) an einer Position zwischen dem zweiten Ausgangsprimärzahnrad (30A) und dem ersten Ausgangsprimärzahnrad (32A) befestigt ist, sowie ein drittes Ausgangsvorgelegezahnrad (31B), das auf der Vorgelegewelle (15) derart vorgesehen ist, dass das dritte Ausgangsvorgelegezahnrad (31B) relativ zur Vorgelegewelle (15) drehbar ist, wobei das dritte Ausgangsvorgelegezahnrad (31B) ausgebildet ist, um in das dritte Ausgangsprimärzahnrad (31A) einzugreifen;
ein viertes Geschwindigkeitswechselzahnradpaar (34), das ein viertes Ausgangsprimärzahnrad (34A) enthält, das auf der Ausgangswelle (14) derart vorgesehen ist, dass das vierte Ausgangsprimärzahnrad (34A) relativ zur Ausgangswelle (14) drehbar ist, wobei das vierte Ausgangsprimärzahnrad (34A) näher zu einem Ausgangsende der Ausgangswelle (14) ist als das erste Ausgangsprimärzahnrad (32A), sowie ein viertes Ausgangsvorgelegezahnrad (34B), das an der Vorgelegewelle (15) befestigt ist, wobei das vierte Ausgangsvorgelegezahnrad (34B) ausgebildet ist, um in das vierte Ausgangsprimärzahnrad (34A) einzugreifen;
erste Verbindungsmittel (40), die ausgebildet sind, um selektiv das erste Eingangsprimärzahnrad (20A) oder das zweite Ausgangsprimärzahnrad (30A) mit der Ausgangswelle (14) zu verbinden;
zweite Verbindungsmittel (41), die ausgebildet sind, um selektiv das zweite Ausgangsvorgelegezahnrad (30B) oder das dritte Ausgangsvorgelegezahnrad (31B) mit der Vorgelegewelle (15) zu verbinden; und
dritte Verbindungsmittel (42), die ausgebildet sind, um selektiv mindestens das erste Ausgangsprimärzahnrad (32A) mit der Ausgangswelle (14) zu verbinden; und
vierte Verbindungsmittel (43), die ausgebildet sind, um selektiv mindestens das vierte Ausgangsprimärzahnrad (34A) mit der Ausgangswelle (14) zu verbinden,
**dadurch gekennzeichnet, dass** das Doppelkupplungsgetriebe derart ausgebildet ist, dass ein Schalten von einer 5. Geschwindigkeit, die das fünfthöchste Übersetzungsverhältnis hat, bei dem die ersten Verbindungsmittel (40) das erste Eingangsprimärzahnrad (20A) mit der Ausgangswelle (14) verbinden, in eine 6. Geschwindigkeit, die das sechsthöchste Übersetzungsverhältnis hat, dadurch ausgeführt wird, dass die zweiten Verbindungsmittel (41) das dritte Ausgangsvorgelegezahnrad (31B) mit der Vorgelegewelle (15) verbinden und dann die erste Kupplung (10) auf die zweite Kupplung (12) geschaltet wird,
und danach ein weiteres Schalten von der 6. Geschwindigkeit in eine 7. Geschwindigkeit, die das siebthöchste Übersetzungsverhältnis hat, dadurch ausgeführt wird, dass die zweite Kupplung (12) ausgerückt wird, die ersten Verbindungsmittel (40) das erste Eingangsprimärzahnrad (20A) mit der Ausgangswelle (14) verbinden, die zweiten Verbindungsmittel (41) das zweite Ausgangsvorgelegezahnrad (30B) mit der Vorgelegewelle (15) verbinden und dann die zweite Kupplung (12) erneut eingerückt wird.

2. Doppelkupplungsgetriebe nach Anspruch 1, wobei das erste, das zweite und das vierte Geschwindigkeitswechselzahnradpaar (32, 30, 34) Untersetzungszahnradpaare sind, deren Anzahl an Zähnen in den Zahnrädern auf der Ausgangswelle (14) größer als die Anzahl an Zähnen in den Zahnrädern auf der Vorgelegewelle (15) ist, und
das dritte Geschwindigkeitswechselzahnradpaar (31) ein Beschleunigungszahnradpaar ist, dessen Anzahl an Zähnen in dem Zahnrad auf der Ausgangswelle (14) kleiner als die Anzahl an Zähnen in dem Zahnrad auf der Vorgelegewelle (15) ist.

3. Doppelkupplungsgetriebe nach Anspruch 1 oder 2, wobei das erste Geschwindigkeitswechselzahnradpaar (32) ein Zahnradpaar ist, das für eine 1. Geschwindigkeit, die das höchste Übersetzungsverhältnis hat, und eine 2. Geschwindigkeit, die das zweithöchste Übersetzungsverhältnis hat, gemeinsam genutzt wird, das dritte Geschwindigkeitswechselzahnradpaar (31) ein Zahnrad für die 6. Geschwindigkeit ist, und für die 7. Geschwindigkeit die zweite Kupplung (12) eingerückt wird, die zweiten Verbindungsmittel (41) das zweite Ausgangsvorgelegezahnrad (30B) mit der Vorgelegewelle (15) verbinden, die ersten Verbindungsmittel (40) das erste Eingangsprimärzahnrad (20A) mit der Ausgangswelle (14) verbinden und das erste Eingangszahnradpaar (20) als Geschwindigkeitswechselzahnradpaar verwendet wird.

## Revendications

1. Une transmission à double embrayage comprenant :
un premier arbre d'entrée (11) muni d'un premier embrayage (10) qui transmet ou interrompt la puissance d'une source d'entraînement ;
un deuxième arbre d'entrée (13) muni d'un deuxième embrayage (12) qui transmet ou interrompt la puissance de la source d'entraînement ;
un arbre de sortie (14) disposé coaxialement avec le premier arbre d'entrée (11) ; un arbre de renvoi (15) disposé parallèlement au premier arbre d'entrée (11), au deuxième arbre d'entrée (13) et à l'arbre de sortie (14) ;
une première paire d'engrenages d'entrée (20) comprenant un premier engrenage primaire d'entrée (20A) fixé au premier arbre d'entrée (11), et un premier contre-engrenage d'entrée (20B) prévu sur l'arbre de renvoi (15) de sorte que le premier contre-engrenage d'entrée (20B) puisse tourner par rapport à l'arbre de renvoi (15), le premier contre-engrenage d'entrée (20B) étant configuré pour s'engrener avec le premier engrenage primaire d'entrée (20A) ;
une deuxième paire d'engrenages d'entrée (21) comprenant un deuxième engrenage primaire d'entrée (21A) fixé sur le deuxième arbre d'entrée (13), et un deuxième contre-engrenage d'entrée (21B) fixé sur l'arbre de renvoi (15), le deuxième contre-engrenage d'entrée (21B) étant configuré pour s'engrener avec le deuxième pignon primaire d'entrée (21A) ;
une première paire d'engrenages de changement de vitesse (32) comprenant un premier engrenage primaire de sortie (32A) prévu sur l'arbre de sortie (14) de telle sorte que le premier engrenage primaire de sortie (32A) puisse tourner par rapport à l'arbre de sortie (14), et un premier contre-engrenage de sortie (32B) fixé à l'arbre de renvoi (15), le premier contre-engrenage de sortie (32B) étant configuré pour s'engrener avec le premier engrenage primaire de sortie (32A) ;
une deuxième paire d'engrenages de changement de vitesse (30) comprenant un deuxième engrenage primaire de sortie (30A) prévu sur l'arbre de sortie (14) de telle sorte que le deuxième engrenage primaire de sortie (30A) puisse tourner par rapport à l'arbre de sortie (14), le deuxième engrenage primaire de sortie (30A) étant plus proche d'une extrémité d'entrée de l'arbre de sortie (14) que le premier engrenage primaire de sortie (32A), et un deuxième contre-engrenage de sortie (30B) configuré pour être solidairement rotatif avec le premier contre-engrenage d'entrée (20B), le deuxième contre-engrenage de sortie (30B) étant configuré pour s'engrener avec le deuxième contre-engrenage de sortie (30A) ;
une troisième paire d'engrenages de changement de vitesse (31) comprenant un troisième engrenage primaire de sortie (31A) fixé à l'arbre de sortie (14) à une position située entre le deuxième engrenage primaire de sortie (30A) et le premier engrenage primaire de sortie (32A), et un troisième contre-engrenage de sortie (31B) prévu sur l'arbre de renvoi (15) de telle sorte que le troisième contre-engrenage de sortie (31B) puisse tourner par rapport à l'arbre de renvoi (15), le troisième contre-engrenage de sortie (31B) étant configuré pour s'engrener avec le troisième engrenage primaire de sortie (31A) ;
une quatrième paire d'engrenages de changement de vitesse (34) comprenant un quatrième engrenage primaire de sortie (34A) prévu sur l'arbre de sortie (14) de telle sorte que le quatrième engrenage primaire de sortie (34A) puisse tourner par rapport à l'arbre de sortie (14), le quatrième engrenage primaire de sortie (34A) étant plus proche d'une extrémité d'entrée de l'arbre de sortie (14) que le premier engrenage primaire de sortie (32A), et un quatrième contre-engrenage de sortie (34B) fixé à l'arbre de renvoi (15), le quatrième contre-engrenage de sortie (34B) étant configuré pour s'engrener avec le quatrième contre-engrenage de sortie (34A) ;
un premier moyen de raccordement (40) configuré pour raccorder sélectivement le premier engrenage primaire d'entrée (20A) ou le deuxième engrenage primaire de sortie (30A) à l'arbre de sortie (14) ;
un deuxième moyen de raccordement (41) configuré pour raccorder sélectivement le deuxième contre-engrenage de sortie (30B) ou le troisième contre-engrenage de sortie (31B) à l'arbre de renvoi (15) ; et
un troisième moyen de raccordement (42) configuré pour raccorder sélectivement au moins le premier engrenage primaire de sortie (32A) à l'arbre de sortie (14) ; et
un quatrième moyen de raccordement (43) configuré pour raccorder sélectivement au moins le quatrième engrenage primaire de sortie (34A) à l'arbre de sortie (14),
**caractérisé en ce que** la transmission à double embrayage est configurée de telle sorte que le passage d'une 5e vitesse, ayant le 5ème rapport de vitesse le plus élevé, dans lequel le premier moyen de raccordement (40) relie le premier engrenage primaire d'entrée (20A) à l'arbre de sortie (14), à une 6e vitesse, ayant le 6ème rapport de vitesse le plus élevé, est réalisée par le deuxième moyen de raccordement (41) reliant le troisième contre-engrenage de sortie (31B) à l'arbre de renvoi (15), puis le premier embrayage (10) étant commuté sur le deuxième embrayage (12),
et ensuite, un nouveau passage de la 6ème à la 7ème vitesse, ayant le 7ème rapport de vitesse le plus élevé, est effectué par le deuxième embrayage (12) déconnecté, le premier moyen de raccordement (40) raccordant le premier rapport primaire d'entrée (20A) à l'arbre de sortie (14), le deuxième moyen de raccordement (41) raccordant le deuxième contre-engrenage de sortie (30B) à l'arbre de renvoi (15), et ensuite le deuxième embrayage (12) reconnecté.

2. Transmission à double embrayage selon la revendication 1, dans laquelle les première, deuxième et quatrième paires d'engrenages de changement de vitesse (32, 30, 34) sont des paires d'engrenages de réduction dont le nombre de dents des engrenages de l'arbre de sortie (14) est supérieur au nombre de dents des engrenages de l'arbre intermédiaire (15), et la troisième paire d'engrenages de changement de vitesse (31) est une paire d'engrenages d'accélération dont le nombre de dents de l'engrenage de l'arbre de sortie (14) est inférieur au nombre de dents de l'engrenage de l'arbre intermédiaire (15).

3. Transmission à double embrayage selon la revendication 1 ou 2, dans laquelle la première paire d'engrenages de changement de vitesse (32) est une paire d'engrenages partagée pour une première vitesse, ayant le rapport de vitesse le plus élevé, une deuxième vitesse, ayant le deuxième rapport de vitesse le plus élevé, la troisième paire d'engrenages de changement de vitesse (31) est un engrenage pour la sixième vitesse, et pour la septième vitesse, le deuxième embrayage (12) est raccordé, le deuxième moyen de raccordement (41) connecte le deuxième contre-engrenage de sortie (30B) à l'arbre de renvoi (15), le premier moyen de raccordement (40) raccorde le premier engrenage primaire d'entrée (20A) à l'arbre de sortie (14), et la première paire d'engrenages d'entrée (20) est utilisée comme une paire d'engrenages de changement de vitesse.
